# EUROPÄISCHE PATENTSCHRIFT

(11) **EP 3 080 502 B1**
(45) Veröffentlichungstag und Bekanntmachung des Hinweises auf die Patenterteilung: **03.04.2019**
(21) Anmeldenummer: 14805608.8
(22) Anmeldetag: 02.12.2014
(51) Int. Cl.: F16L 5/04, H02G 3/04, H02G 3/22

(54) **VORRICHTUNG ZUR DURCHFÜHRUNG VON ROHREN ODER KABELN DURCH EINE GEBÄUDEÖFFNUNG**
APPARATUS FOR GUIDING TUBES OR CABLES THROUGH A BUILDING OPENING
DISPOSITIF PERMETTANT DE FAIRE PASSER DES CONDUITES OU DES CÂBLES À TRAVERS UNE OUVERTURE DE BÂTIMENT

(30) Priorität: 09.12.2013 EP 13196170
(43) Veröffentlichungstag der Anmeldung: 19.10.2016
(73) Patentinhaber: Hilti Aktiengesellschaft, 9494 Schaan (LI)
(72) Erfinder: SEMLER, Rudolf, 86931 Prittriching (DE); MONDEN, Thomas, 87778 Stetten (DE); PAETOW, Mario, 86859 Igling (DE); FÖRG, Christian, 86862 Dillishausen (DE)
(86) Internationale Anmeldenummer: PCT/EP2014/076168
(87) Internationale Veröffentlichungsnummer: WO 2015/086367

(56) Entgegenhaltungen:
- DE-B3-102011 105 575
- GB-A- 2 318 975
- US-A1- 2003 079 897
- US-A1- 2013 307 225
- "Intumex CSP - Fire Stopping Coating", , 3. April 2012 (2012-04-03), XP055106024, Gefunden im Internet: URL:http://www.intumex-fs.com/pdf/datashee t/Intumex%20CSP-DS%20[EN].pdf [gefunden am 2014-03-06]

## Beschreibung

Die vorliegende Erfindung betrifft eine Vorrichtung zur Durchführung von Rohren oder Kabeln durch eine Gebäudeöffnung, wie etwa einen Decken- oder Wanddurchbruch.

Kabel- und Rohrdurchführungen durch Decken und Wände müssen in ausreichendem Maße gegen die Weiterleitung von Bränden gesichert sein. Einerseits muss verhindert werden, dass der Brand unmittelbar durch die Öffnung auf einen benachbarten Raum überspringt. Andererseits soll eine thermische Trennung der Räume gewährleistet sein, damit verhindert wird, dass die Temperatur auf der dem Feuer abgewandten Seite der betreffenden Decke oder Wand so stark ansteigt, dass es dort zur Selbstentzündung kommen kann. Diesbezüglich müssen bestimmte gesetzliche Zulassungen im Hinblick auf die Brandschutzeigenschaften erfüllt werden.

In dem Dokument US 2003/0079897 A1 wird eine Bodendurchführung zur Klimatisierung von Gebäude- und Bürostrukturen über ein Unterflur-Plenum beschrieben. Dabei werden speziell gerichtete Strömungen von klimatisierter Luft aus dem Plenum optimiert, indem das unerwünschte Entweichen von Luft aus dem Plenum in den Raum über dem Boden durch Bodenöffnungen begrenzt wird, die für den Durchgang von Stromkabeln, Datenkabeln und dergleichen vorgesehen sind. Die Bodendurchführungen, die in den Kabelöffnungen installiert sind, umfassen einen umgebenden Rahmen, der Dichtungselemente trägt. Die Dichtungselemente bestehen aus dünnen, flexiblen Elementen, die an einem Ende in dem Durchführungsrahmen verankert sind und sich von jeder Seite zur Mitte der Öffnung hin erstrecken, um die Öffnung wirksam gegen einen erheblichen Strom von klimatisierter Luft aus dem darunter befindlichen Plenum zu verschließen. Durch die Durchführungsöffnung hindurchgehende Kabel lenken die flexiblen Elemente minimal ab, um das Entweichen von klimatisierter Luft zu begrenzen.

Die Installation der Kabel oder Rohre soll einfach bleiben und durch Brandschutzmaßnahmen nicht behindert werden. Bisher wurden zu diesem Zweck kastenförmige Gehäuse in die Öffnungen eingesetzt, die einen Durchlasskanal für die zu installierenden Leitungen bilden. Das Gehäuse wird in die entsprechende Decke oder Wand eingegossen. Nach dem Durchführen der Rohre oder Kabel wird das Innere des Gehäuses mit einer feuerfesten Dichtmasse ausgegossen, bzw. mit Mineralwolle gestopft und anschließend mit Feuerfester Dichtmasse abgedichtet, die die Leitungen umschließt.

Diese Brandschutzlösung weist allerdings zahlreiche Nachteile auf. Die Aushärtezeiten der Dichtmassen sind lang, und der handwerkliche und zeitliche Aufwand bei der Installation ist vergleichsweise hoch. Schlecht zugängliche Öffnungen lassen sich damit nur schwer verschließen. Darüber hinaus ist diese Lösung nicht für alle Anwendungen geeignet. Ein solches Anwendungsbeispiel stellen vormontierte Klimaaggregate dar, wie sie beispielsweise in größeren Appartementhäusern eingesetzt werden. Die Zuführungsleitungen eines solchen Aggregats ragen aus seinem Boden heraus. Es lässt sich auf einfache Weise aufstellen, in dem die Leitungen in einen Bodendurchbruch eingesetzt werden und das Aggregat darauf gekippt wird, so dass die gesamte Einheit auf der Bodenöffnung steht und diese teilweise oder ganz verdeckt. Es versteht sich, dass die oben beschriebenen Gehäuse zum Eingießen der durchgeführten Leitungen mit einer Dichtmasse für diesen Anwendungsfall nicht geeignet sind, da die Öffnung im Boden nach dem Aufstellen des Aggregats nicht mehr zugänglich ist.

Es ist daher eine Aufgabe der vorliegenden Erfindung, eine Vorrichtung zur Durchführung von Rohren oder Kabeln durch eine Gebäudeöffnung zu schaffen, die einfach zu installieren ist und eine flexible Positionierbarkeit der Rohre oder Kabel innerhalb der Öffnung gewährleistet, andererseits jedoch eine Weiterleitung eines Brandes zuverlässig verhindert und die aneinander angrenzenden Räume, die durch die Öffnung verbunden werden, thermisch ausreichend voneinander isoliert.

Diese Aufgabe wird erfindungsgemäß durch eine Vorrichtung mit den Merkmalen des Anspruchs 1 gelöst.

Die erfindungsgemäße Vorrichtung zur Durchführung von Rohren oder Kabeln durch eine Gebäudeöffnung umfasst ein hülsenartiges Gehäuse, das einen axialen Durchlasskanal aufweist, der an seinen gegenüberliegenden Enden offen ist. Dieses Gehäuse kann in die betreffende Decke oder Wand eingegossen werden, so dass der Durchlasskanal zur Durchführung der zu installierenden Rohre oder Kabel frei bleibt. An den Wänden des Durchlasskanals sind Bürsten angebracht, die sich in den Kanal hinein erstrecken, und zwar auf solche Weise, dass ihre Borsten zum Verschluss des Durchlasskanals ineinander greifen. Darüber hinaus sind im Durchlasskanal flexible Materialstreifen angebracht, die mit einem intumeszierenden, d.h. sich unter Hitzeeinwirkung ausdehnenden und einen feuerfesten, steifen Körper bildenden Material beschichtet sind.

Die Bürsten dienen als Konvektionssperre für Brandgase und dichten den Durchlasskanal optisch ab, so dass die Gebäudeöffnung blickdicht wird. Beim Einschieben eines Rohrs oder Kabels weichen die Borsten seitlich aus und legen sich um die Rohre oder Kabel herum, so dass die abdichtende Wirkung weitgehend erhalten bleibt. Die Flexibilität bzw. Steifigkeit der Borsten ist zu diesem Zweck geeignet zu wählen. Sie können aus anorganischen oder organischen Fasern bestehen, die feuerfest sind und eine hohe Hitzebeständigkeit aufweisen.

Im Brandfall wird der Durchlasskanal durch das intumeszierende Material verschlossen, das auf den flexiblen Streifen aufgebracht ist. Das intumeszierende Material expandiert und verschließt den Durchlasskanal im Idealfall vollständig.

Bezüglich der Wahl des Basismaterials für die Streifen bestehen keine grundsätzlichen Beschränkungen. Es ist zweckmäßig, hierfür ein Material zu wählen, das eine gewisse Hitzebeständigkeit aufweist. Beispielsweise können die Streifen aus einem geeigneten Gewebe hergestellt sein.

Die erfindungsgemäße Anordnung der Bürsten und flexiblen Streifen bietet den Vorteil, dass die freie Positionierbarkeit der Rohre oder Kabel innerhalb der Gebäudeöffnung nicht behindert wird und somit die Installation wesentlich vereinfacht wird, dennoch aber auf zuverlässige Weise ein brandsicherer Verschluss erreicht wird. Die Bürsten können ferner als Untergrund für eine Dichtmasse, insbesondere eine selbstverlaufende Dichtmasse, wie z. B. eine selbstverlaufende Silicon-Dichtmasse wirken, die Öffnung gegen das Eindringen von Wasser abdichtet, wenn Wasserdichtigkeit und/oder Gasdichtigkeit gefordert ist.

Die erfindungsgemäße Vorrichtung bietet den zusätzlichen Vorteil, dass schon nach Erstellung des Rohbaus mit den fertig verschalten Decken und Wänden ein gewisser Brandschutz gewährleistet ist. Zusätzliche Isolierungsmaßnahmen, wie etwa eine Mineralwollisolierung, sind dann überflüssig.

Gemäß einer bevorzugten Ausführungsform der vorliegenden Erfindung ragen die flexiblen Materialstreifen von den Wänden des Durchlasskanals nach innen, ähnlich wie die Bürsten, wobei die Streifen aufgrund ihres Eigengewichts etwas nach unten durchhängen können.

Gemäß einer weiteren bevorzugten Ausführungsform der vorliegenden Erfindung ist das Basismaterial der flexiblen Streifen ein Gewebe, insbesondere ein Glasfasergewebe. Die Glasfasern wirken als innere Armierung und halten das aufgeschäumte intumeszierende Material der Beschichtung sicher im Durchlasskanal.

Gemäß einer weiteren bevorzugten Ausführungsform weist der Durchlasskanal einen etwa rechteckigen Querschnitt auf, wobei an zwei parallel gegenüberliegenden flachen Wänden je eine Bürste angebracht ist. Die Borstenreihen dieser Bürsten ragen in den Durchlasskanal hinein und weisen aufeinander zu, so dass sie an ihren Enden ineinander greifen und den Kanal verschließen.

Vorzugsweise sind die Bürsten an einem in der Einbauposition oberen Ende des Durchlasskanals angeordnet, während die flexiblen Streifen darunter versetzt angeordnet sind. Die Bürsten sorgen in diesem Fall für eine blickdichte Abdichtung und für eine Konvektionssperre am oberen Kanalende, während die flexiblen Materialstreifen darunter liegend frei in den Kanal hineinragen können.

Gemäß einer weiteren bevorzugten Ausführungsform der Erfindung ist das Gehäuse zumindest an einem seiner axialen Enden mit einem sich radial nach außen erstreckenden Flansch versehen. Dieser Flansch schließt bei der Installation des Gehäuses mit der an die Öffnung angrenzenden Decken- oder Wandfläche ab oder liegt darauf auf, so dass die Installation erleichtert wird.

Im Folgenden wird ein bevorzugtes Ausführungsbeispiel der vorliegenden Erfindung anhand der Zeichnung näher erläutert.
Fig. 1 ist ein Querschnitt durch eine Ausführungsform der erfindungsgemäßen Vorrichtung zur Durchführung von Rohren oder Kabeln durch eine Gebäudeöffnung, und
Fig. 2 ist eine Draufsicht auf die in Fig. 1 dargestellte Vorrichtung.

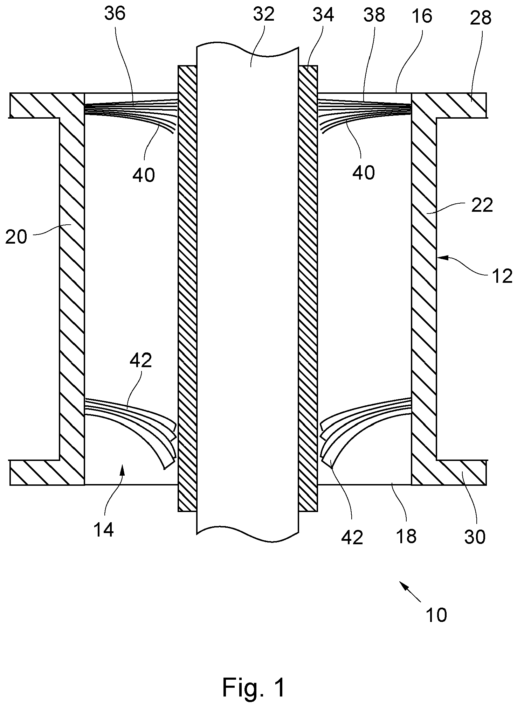

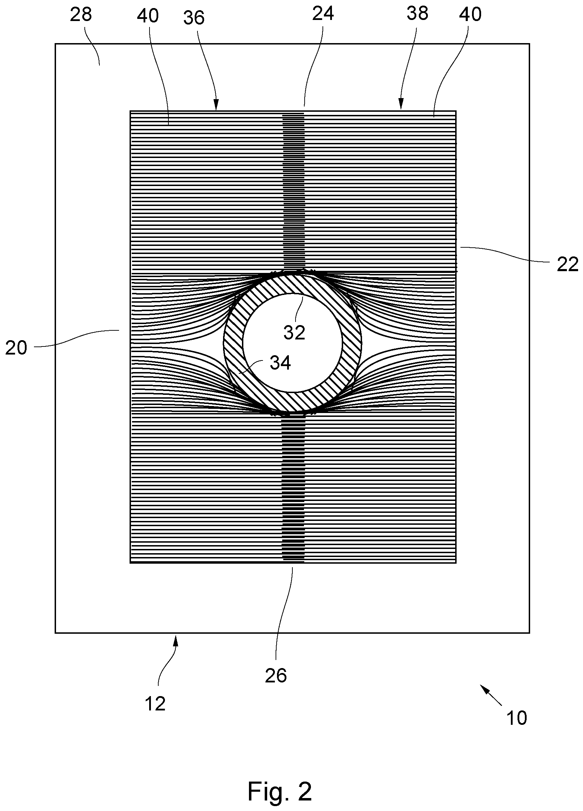

Die in Fig. 1 dargestellte Vorrichtung 10 zur Durchführung von Rohren oder Kabeln durch eine Gebäudeöffnung umfasst ein hülsenartiges Gehäuse 12, das etwa kastenartig ausgebildet ist und somit einen rechteckigen Querschnitt aufweist, wie in der Draufsicht in Fig. 2 besser erkennbar ist. In der Mitte des Gehäuses 12 ist ein axialer Durchlasskanal 14 vorhanden, der an seinem oberen Ende 16 und seinem unteren Ende 18 offen ist und von den vier senkrechten Gehäusewänden 20, 22, 24, 26 begrenzt wird. Die Begriffe "oben" und "unten" sowie "horizontal" und "vertikal" beziehen sich hier und in der gesamten Beschreibung sowie in den Ansprüchen auf die dargestellte Einbauposition der Vorrichtung 12 in einer nicht näher dargestellten Decke eines Gebäudes. Diese Installationsweise ist jedoch nicht als beschränkend für die vorliegende Erfindung anzusehen. Vielmehr ist es auch denkbar, eine entsprechende Vorrichtung in eine Wandöffnung einzubauen, so dass das Gehäuse 12 gegenüber der in Fig. 1 dargestellten Position auf die Seite gekippt ist und der Durchlasskanal 14 horizontal verläuft.

An seinem oberen Ende weist das Gehäuse 12 einen sich radial nach außen erstreckenden Flansch 28 auf, der die obere Öffnung 16 vollständig umläuft. Ein entsprechender radialer Flansch 30 ist auch am unteren Ende des Gehäuses 12 vorgesehen. Die umlaufenden Flansche 28, 30 sind dazu vorgesehen, in der dargestellten Einbauposition in Fig. 1 mit den entsprechenden Flächen auf der Oberseite und der Unterseite der Gebäudedecke abzuschließen, in welche die Vorrichtung 10 eingesetzt wird. Die Vorrichtung 10 wird installiert, indem das Gehäuse 12 beim Erstellen der Decke mit dem Beton vergossen wird.

Innerhalb des Gehäuses 12 ist ein senkrechtes Rohr 32 dargestellt, das mit einer Umhüllung 34 aus einem Dämmstoff umgeben ist. Dieses Rohr 32 steht lediglich beispielhaft für ein Rohr oder Kabel, das durch die Öffnung in der Decke geführt werden soll. Wie in den Fig. 1 und 2 deutlich erkennbar ist, hat das Rohr 32 einen deutlich kleinen Querschnitt als der freie Öffnungsquerschnitt des axialen Durchlasskanals 14, so dass das Rohr 32 bei seiner Installation darin seitlich verschoben werden kann.

Am oberen Ende des Durchlasskanals 14 sind in dessen oberer Öffnung 16 zwei Bürsten 36, 38 vorhanden, die an den gegenüberliegenden längeren Wänden 20, 22 des Durchlasskanals 14 angebracht sind und deren Borsten 40 sich etwa horizontal zur Mitte des Durchlasskanals 14 hin erstrecken. Die Borsten 40 sind flexibel, und ihre Länge ist so bemessen, dass sie in der Kanalmitte zum Verschluss des Durchlasskanals 14 ineinander greifen können. Diese Situation ist in Fig. 2 neben dem Rohr 32 dargestellt. In der Mitte des Durchlasskanals 14, wo das Rohr 32 in den Kanal eingesetzt ist, weichen die Borsten 40 seitlich, also in der Ebene des Flansches 28 und nach unten aus und schmiegen sich aufgrund ihrer Flexibilität an den Außenumfang der Dämmstoffhülle 34 des Rohrs 32. Die beiden Bürsten 36, 38 bilden somit eine Art Vorhang, der den freien Querschnitt des Durchlasskanals 14 blickdicht verschließt und eine Konvektionssperre bildet. Die Borsten 40 können aus einem beliebigen geeigneten Material hergestellt sein, beispielsweise aus einem organischen oder auch aus einem anorganischen Fasermaterial. Die Borsten 40 stehen entlang der jeweiligen Bürste 36, 38 horizontal nebeneinander über die gesamte Breite der entsprechenden Wand 20, 22.

Vor dem Einsetzen des Rohrs 32 verschließen die beiden ineinander greifenden Bürsten 36, 38 den freien Querschnitt des Durchlasskanals 14 vollständig. Durchstößt das Rohr 32 beispielsweise von oben die obere Öffnung 16, streben die Borsten 40 in der bereits beschriebenen Weise seitlich und nach unten auseinander und geben lediglich einen ausreichend großen Querschnitt zum Einschieben des Rohrs 32 frei.

Die dargestellte Ausführungsform der erfindungsgemäßen Vorrichtung 10 umfasst ferner flexible Materialstreifen 42, die auf einer Höhe unterhalb der Bürsten 36, 38 an denselben Gehäusewänden 20, 22 angebracht sind. Jeder der Streifen 42 ist mit einem seiner Enden an einer der Wände 20, 22 befestigt, während sein freies Ende in den Durchlasskanal 14 hineinragt. Der Streifen 42 kann hierbei etwas nach unten durchhängen, sollte jedoch eine ausreichende Steifigkeit aufweisen, um zu gewährleisten, dass sich Streifen 42 von gegenüberliegenden Wänden 20, 22 etwa in der Mitte des Durchlasskanals 14 berühren oder zumindest weitgehend annähern. An dem eingeschobenen Rohr 32 liegen die Streifen 42 seitlich an. Jeweils eine Reihe von Streifen 42 erstreckt sich über die gesamte Breite der jeweiligen Wand 20, 22 unterhalb einer Bürste 36, 38.

Die Streifen 42 bestehen aus einem nichtbrennbaren Gewebe, insbesondere aus einem Glasfasergewebe als Basismaterial und sind mit einem intumeszierenden Material beschichtet, das sich unter Hitzeeinwirkung ausdehnt und einen feuerfesten, steifen Körper bildet. Im vorliegenden Fall schäumt die intumeszierende Materialbeschichtung auf den flexiblen Gewebetreifen 42 im Brandfall auf, so dass das intumeszierende Material den verbleibenden freien Raum zwischen dem Außenumfang des Rohrs 32 und den Wänden 20, 22, 24, 26 des Gehäuses 12 vollständig abdichtet. Auf diese Weise wird eine Brandsperre gebildet, die verhindert, dass ein Brand durch die Decke in den jeweils angrenzenden Raum überspringen kann. Ferner wird hierdurch eine thermische Isolierung zwischen den Räumen gebildet.

Der im Brandfall entstehende Block aus aufgeschäumtem intumeszierendem Material wird durch die Glasfaserarmierung der flexiblen Gewebestreifen 42 in dem Durchlasskanal 14 gehalten und am Herunterfallen aus der Öffnung gehindert. Auch Asche kann nicht mehr durch den Durchlasskanal 14 hindurch fallen.

Ferner können die Bürsten 36, 38 mit ihren Borsten 40 als Untergrund für eine selbstverlaufende Silikondichtmasse dienen, die am oberen Ende der Vorrichtung 10 auf die Bürsten in der oberen Öffnung 16 verteilt wird. Hierdurch lässt sich der Durchlasskanal 14 gegen ein Eindringen von Wasser abdichten.

Die dargestellte Vorrichtung 10 ist einfach zu installieren und erlaubt eine gute Positionierbarkeit des durchzuführenden Rohrs oder Kabels innerhalb des Durchlasskanals 14, da sich die flexiblen Borsten 40 der Bürsten 36, 38 und die flexiblen Gewebetreifen 42 gut an der Außenfläche des Rohrs bzw. Kabels anschmiegen und den verbleibenden freien Öffnungsquerschnitt zuverlässig verschließen.

## Patentansprüche

1. Vorrichtung (10) zur Durchführung von Rohren (32) oder Kabeln durch eine Gebäudeöffnung, mit
- einem hülsenartigen Gehäuse (12), das einen axialen Durchlasskanal (14) aufweist, der an seinen gegenüberliegenden Enden (16, 18) offen ist,
- Bürsten (36, 38), die an Wänden (20, 22) des Durchlasskanals (14) gegenüberliegend angebracht sind und deren Borsten (40) sich nach innen erstrecken, derart, dass sie zum Verschluss des Durchlasskanals (14) ineinander greifen,
- und flexiblen Materialstreifen (42), die im Durchlasskanal (14) angebracht sind,
**dadurch gekennzeichnet, dass** die flexiblen Materialstreifen (42) mit einem intumeszierenden Material beschichtet sind.

2. Vorrichtung gemäß Anspruch 1, **dadurch gekennzeichnet, dass** die flexiblen Materialstreifen (42) von den Wänden (20, 22) des Durchlasskanals (14) nach innen ragen.

3. Vorrichtung gemäß Anspruch 1 oder 2, **dadurch gekennzeichnet, dass** das Basismaterial der flexiblen Streifen (42) ein nichtbrennbares Gewebe, insbesondere ein Glasfasergewebe ist.

4. Vorrichtung gemäß einem der vorstehenden Ansprüche, **dadurch gekennzeichnet, dass** der Durchlasskanal (14) einen etwa rechteckigen Querschnitt aufweist, und dass an zwei parallel gegenüberliegenden flachen Wänden (20, 22) des Durchlasskanals (14) je eine Bürste (36, 38) angebracht ist.

5. Vorrichtung gemäß einem der vorstehenden Ansprüche, **dadurch gekennzeichnet, dass** die Bürsten (36, 38) und die flexiblen Materialstreifen (42) versetzt voneinander angeordnet sind.

6. Vorrichtung gemäß einem der vorstehenden Ansprüche, **dadurch gekennzeichnet, dass** das Gehäuse (12) zumindest an einem seiner axialen Enden mit einem sich radial nach außen erstreckenden Flansch (28, 30) versehen ist.

## Claims

1. Device (10) for conducting pipes (32) or cables through an opening in a building, with
a sleeve-like housing (12), which has an axial channel (14), which is open at its ends lying opposite each other (16, 18),
brushes (36, 38), which are applied to the walls (20, 22) of the channel (14) lying opposite each other and the bristles (40) of which extend inwards in such a way that they engage with each other to close the channel (14),
and flexible strips of material (42), which are applied in the channel (14),
**characterised in that** the flexible strips of material (42) are coated with an intumescent material.

2. Device according to claim 1, **characterised in that** the flexible strips of material (42) project inwards from the walls (20, 22) of the channel (14).

3. Device according to claim 1 or 2, **characterised in that** the base material of the flexible strips (42) is a non-flammable fabric, particularly a glass fibre fabric.

4. Device according to one of the previous claims, **characterised in that** the channel (14) has a more or less rectangular cross section and a brush (36, 38) is applied to two flat walls (20, 22) of the channel (14) lying opposite each other.

5. Device according to one of the above claims, **characterised in that** the brushes (36, 38) and the flexible strips of material (42) are arranged offset to each other.

6. Device according to one of the above claims, **characterised in that** the housing (12) is provided with a flange (28, 30) extending radially outwards at least at one of its axial ends.

## Revendications

1. Dispositif (10) destiné à faire passer des tuyaux (32) ou des câbles à travers une ouverture de bâtiment, comportant :
- un boîtier en forme de douille (12) qui comporte un canal de passage axial (14) qui est ouvert à ses extrémités opposées (16, 18),
- des brosses (36, 38) qui sont montées de manière opposée sur des parois (20, 22) du canal de passage (14) et dont les soies (40) s'étendent vers l'intérieur de telle sorte qu'elles s'imbriquent les unes dans les autres pour obturer le canal de passage (14),
- et des bandes de matière souples (42) qui sont montées dans le canal de passage (14),
**caractérisé en ce que** les bandes de matière souples (42) sont revêtues d'une matière intumescente.

2. Dispositif selon la revendication 1, **caractérisé en ce que** les bandes de matière souples (42) font saillie vers l'intérieur à partir des parois (20, 22) du canal de passage (14).

3. Dispositif selon la revendication 1 ou 2, **caractérisé en ce que** la matière de base des bandes souples (42) est un tissu tissé non combustible, en particulier un tissu en fibres de verre.

4. Dispositif selon l'une des revendications précédentes, **caractérisé en ce que** le canal de passage (14) a une section transversale sensiblement rectangulaire, et **en ce qu'**une brosse (36, 38) est respectivement montée sur deux parois plates (20, 22) du canal de passage (14) parallèlement opposées.

5. Dispositif selon l'une des revendications précédentes, **caractérisé en ce que** les brosses (36, 38) et les bandes de matière souples (42) sont agencées de manière décalée les unes par rapport aux autres.

6. Dispositif selon l'une des revendications précédentes, **caractérisé en ce que** le boîtier (12) est muni au moins à l'une des ses extrémités axiales d'une collerette (28, 30) s'étendant radialement vers l'extérieur.
